# EUROPEAN PATENT APPLICATION

(11) **EP 3 373 274 A1**
(43) Date of publication of application: **12.09.2018**
(21) Application number: 15908637.0
(22) Date of filing: 18.12.2015
(51) Int. Cl.: G09B 5/06

(54) **ELECTRONIC SOUND BOOK WITH DETACHABLE SOUND PRODUCTION DEVICE AND BOOK CONTENT IDENTIFICATION METHOD THEREFOR**

(30) Priority: 20.11.2015 CN 201510813290
(71) Applicant: Leo Paper Bags Manufacturing (1982) Limited, Hong Kong (CN); Heshan Astros Printing Ltd., Heshan, Guangdong 529700 (CN)
(72) Inventor: LAM, Cannie, Hong Kong (CN); YEUNG, Daniel, Hong Kong (CN)
(74) Representative: Westphal, Mussgnug & Partner Patentanwälte mbB
(86) International application number: PCT/CN2015/097880
(87) International publication number: WO 2017/084141

(57) **Abstract**

An electronic sound book with a detachable sound production device and a book content identification method therefor. The sound production device can be separated from or combined with a book body. The sound production device is applicable to different books and can produce corresponding sounds. The use of a detachable sound production device makes the electronic sound book become light and handy. Moreover, because there is no need to mount a heavy sound production device on a book, the contents of the book can be correspondingly increased, thereby improving the practicability of the book.

## Description

### FIELD OF THE INVENTION

The disclosure relates to the field of electronic sounding book, and more particularly to an electronic sounding book with a detachable sounding device and a book content identification method thereof.

### BACKGROUND OF THE INVENTION

Electronic sounding books are educational readings that help children to develop their vision, audition and operational abilities, and the children can play sounds or music corresponding to reading contents through a button to increase the interest and interactivity of the readings and break the boring learning methods, so that the children can learn in entertainment. There are many electronic sounding books of different sizes and types on the market today, which meets the needs of the market.

Most electronic sounding books on the market today are provided with a sounding device for each book, so that the book is large, bulky and impractical. Furthermore, the production cost of the sounding device is generally high, so that the cost of the electronic sounding book is high. Meanwhile, the large-scale use of electronic components does not meet the concept of green environmental protection. If the technical problem above can be solved, this type of product can become more beautiful, practical and affordable, which is conductive to increasing the market share and meeting the concept of energy saving and environmental protection at the same time.

In the prior art, the sounding device can only be used in connection to a single specific book, which has little practical effect. If a sounding device can be applied to many books or even all series of products, the production cost can be reduced and the design can be more humanized.

### SUMMARY OF THE INVENTION

In order to solve the problem above, the disclosure aims at providing an electronic sounding book with a detachable sounding device and a book content identification method thereof, wherein a mode that a sounding device is separated from or combined with a book is used, the sounding device can be applied to different books and can make corresponding sounds, and the technical product has multiple functions and rich contents.

The technical solution used in the disclosure to solve the problem thereof is as follows.

An electronic sounding book with a detachable sounding device comprises a book body, a sounding device and a button device, wherein the button device is arranged on the book body and/or the sounding device, the book body is provided with an content identification module for recognizing a current book body and the button device of a corresponding book page content, the sounding device comprises a loudspeaker, a battery, an audio control chip and a first communication module for communicating with the content identification module, and the loudspeaker, the battery and the first communication module are respectively connected to the audio control chip.

The mode that the sounding device is separated from or combined with the book body is used in the disclosure, the sounding device can be applied to different books and can make corresponding sounds, and the technical product has multiple functions and rich contents. Using the detachable sounding device makes the electronic sounding book become light and handy, and the contents of the book can be correspondingly increased since there is no need to install a heavy sounding device on the book, thereby improving the practicability of the book; moreover, using this technology enables a user only to purchase one sounding device that can be used in multiple books and even a full range of products, which is not only economical and practical, but also goes along with a simple and environmental idea; and the detachable sounding device can be designed in various shapes, and can be designed and promoted for users of different ages.

Further, the audio control chip is a voice chip that is stored with one or more book body voice data, the content identification module comprises a code storage device that is stored with an independent code corresponding to a content of the current book body and a second communication module for connecting to the first communication module, and the code storage device is connected to the second communication module. The voice data is stored in the voice chip avoiding arranging a high-volume storage device on the book body, and the book body only needs to store the independent code of current book body, which can effectively saves production cost and the cost of a user on changing the book body.

Further, the content identification module comprises a voice chip that is stored with voice data of the current book body, a code storage device that is stored with an independent code corresponding to a content of the current book body and a second communication module for connecting to the first communication module, and the code storage device and the voice chip are connected to the second communication module. The voice chip is arranged in the book body, the audio control chip does not need to be stored an audio data of the book body in advance, the manufacturing cost at an early stage is relatively low, the development elasticity and extensibility of future market are relatively high, and the product development has low risk.

Further, the button device is arranged on the book body, and the button device is connected to the audio control chip through the second communication module and the first communication module. The button device can be arranged on the book body, the button of the corresponding book page content on the book body is pressed to make sounds, and the button device can be closer to the content in the book page, thereby having better interactivity.

As another improvement to the foregoing contents, the button device is arranged on the sounding device, and the button device is connected to the audio control chip. The sounding device is integrated with the button device, which can further save the production cost of the book body.

The book body and the sounding device can also be provided with the button device at the same time to acquire the advantages of the two embodiments above.

Further, the electronic sounding book comprises two or more sounding devices, and each sounding device is respectively connected to the same book body. The book body is connected to two or more sounding devices, which can enable the sounding devices corresponding to different models and different functions to make sounds according to different buttons, so that the interactivity is greatly increased.

Further, the electronic sounding book comprises two or more book bodies, and each book body is respectively connected to the same sounding device. A mode that a sounding device is commonly used in multiple book bodies is used, and when multiple books are operated, only one sounding device needs to be used, which can effectively saves the use cost of the user.

Further, the first communication module and the second communication module are connected through a wired or wireless manner.

Specifically, the first communication module and the second communication module are connected through a conductive wire. By connecting through the conductive wire, the sounding device does not need to occupy the volume on the book body, and the connection is more convenient as well.

Specifically, the first communication module and the second communication module are inserting ports, and the sounding device is detachably installed in the book body. Using a inserting mode enables the sounding device to have a better integrating degree with the book body.

Further, the first communication module and the second communication module are connected through a wireless manner. By connecting through a wireless manner, the sounding book can be completely separated from the book body to use, which is easy for the user to use.

Further, the second communication module can be inserted and installed in the book body. The second communication module is inserted in corresponding book while needing to be used, which can effectively saves the production cost of the book body.

According to a book content identification method of the electronic sounding book with a detachable sounding device, the content identification module on the book body is stored with content identification information of the current book body and the corresponding button device of the corresponding book page content, when the content identification module is connected to the audio control chip on the sounding device, the audio control chip acquires the information of the current book body connected and the corresponding button device of the corresponding book page content of the book body, when the button device of the corresponding book page content is pressed, the audio control chip drives the loudspeaker to make a sound corresponding to the book body, the book page and the button according to the recognized information, and the content identification module comprises the second communication module for connecting to the first communication module.

Further, the content identification module is stored with an independent code corresponding to the book body, the audio control chip is stored with voice data of each independently coded book body and a relationship of the specific voice data corresponding to the book body in advance, after the sounding device is connected to the book body, the currently connected book body is recognized through the independent code, and the relationship of the specific voice data corresponding to the book body of the button device is obtained, and after the button device is pressed, the audio control chip drives the loudspeaker to make a sound corresponding to the book body, the book page and the button according to the relationship between the specific button and the voice data recognized.

Further, the content identification module is stored with an independent code corresponding to the current book body and is stored with voice data corresponding to the code and the book page content, after the sounding device is connected to the book body, a relationship of the specific voice data corresponding to the book body of the button device is obtained through the code, and after the button device is pressed, the audio control chip drives the loudspeaker to make a sound corresponding to the book body, the book page and the button according to the relationship between the specific button and the voice data recognized.

Further, the sounding device is connected to multiple book bodies, and is used as a common sounding device of multiple book bodies.

As another improvement to the foregoing contents, the book body is connected to multiple sounding devices, and when the button device is pressed, one or more specific sounding devices appointed by current button device make sounds.

The disclosure has the beneficial effects that: according to the electronic sounding book with a detachable sounding device and the book content identification method thereof used in the disclosure, the sounding device can be separated from or combined with the book body, the sounding device can be applied to different books and make corresponding sounds, and the technical product has multiple functions and rich contents. Using the detachable sounding device makes the electronic sounding book become light and handy, and the contents of the book can be correspondingly increased since there is no need to install a heavy sounding device on the book, thereby improving the practicability of the book; moreover, using this technology enables a user only to purchase one sounding device that can be used in multiple books and even a full range of products, which is not only economical and practical, but also goes along with a simple and environmental idea; and the detachable sounding device can be designed in various shapes, and can be designed and promoted for users of different ages. The disclosure is not limited to an audio control chip, and different chips can be used for different outputs, such as light, picture, image or action.

### BRIEF DESCRIPTION OF THE DRAWINGS

The disclosure is further described hereinafter with reference to the drawings and the embodiments.
Fig. 1 is a circuit functional diagram of a sounding device according to the disclosure;
Fig. 2 is a schematic diagram in the first embodiment according to the disclosure;
Fig. 3 is a schematic diagram in the second embodiment according to the disclosure;
Fig. 4 is a schematic diagram in the third embodiment according to the disclosure;
Fig. 5 is a schematic diagram in the fourth embodiment according to the disclosure;
Fig. 6 is a schematic diagram in the fifth embodiment according to the disclosure;
Fig. 7 is a schematic diagram in the sixth embodiment according to the disclosure;
Fig. 8 is a schematic diagram in the seventh embodiment according to the disclosure;
Fig. 9 is a schematic diagram in the eighth embodiment according to the disclosure;
Fig. 10 is a schematic diagram in the ninth embodiment according to the disclosure;
Fig. 11 is a schematic diagram in the tenth embodiment according to the disclosure;
Fig. 12 is a schematic diagram in the eleventh embodiment according to the disclosure;
Fig. 13 is a schematic diagram in the twelfth embodiment according to the disclosure;
Fig. 14 is a circuit functional block diagram of a button device arranged on a book body and a voice chip arranged on a sounding device according to the disclosure;
Fig. 15 is a circuit functional block diagram of the button device arranged on the sounding device and the voice chip arranged on the sounding device according to the disclosure;
Fig. 16 is a circuit functional block diagram of the button device arranged on the book body and the voice chip arranged on the book body according to the disclosure;
Fig. 17 is a circuit functional block diagram of the button device arranged on the sounding device and the voice chip arranged on the sounding device according to the disclosure;
Fig. 18 is a schematic diagram in the thirteenth embodiment according to the disclosure;
Fig. 19 is a schematic diagram in the fourteenth embodiment according to the disclosure; and
Fig. 20 is a schematic diagram in the fifteenth embodiment according to the disclosure.

### DETAILED DESCRIPTION OF THE EMBODIMENTS

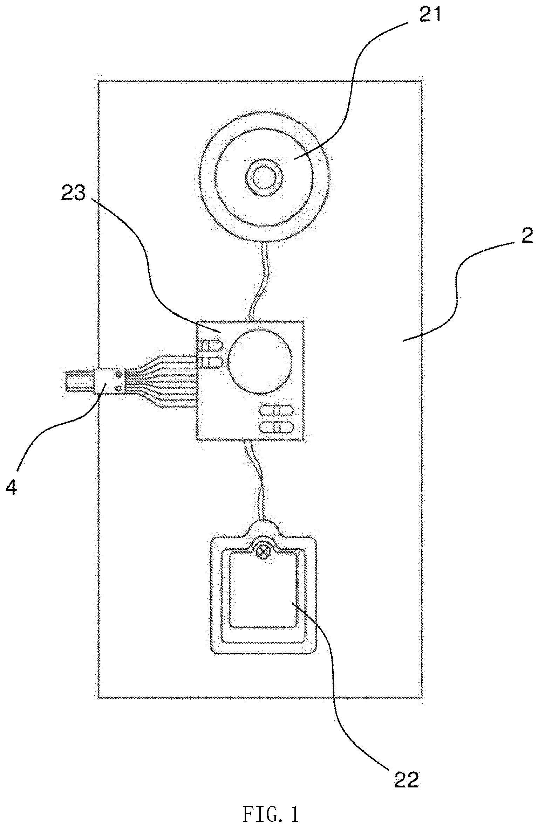

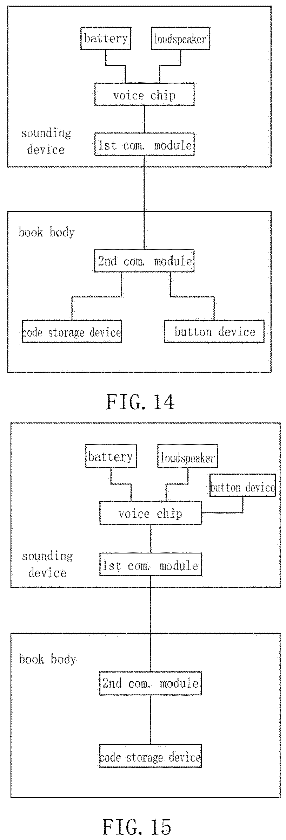

Referring to Fig. 1 to Fig. 15, an electronic sounding book with a detachable sounding device according to the disclosure comprises a book body 1, a sounding device 2 and a button device 6, wherein the button device 6 is arranged on the book body 1 and/or the sounding device 2, the book body 1 is provided with an content identification module for recognizing a current book body 1 and the button device 6 of a corresponding book page content, the sounding device 2 comprises a loudspeaker 21, a battery 22, an audio control chip 23 and a first communication module 4 for communicating with the content identification module, and the loudspeaker 21, the battery 22 and the first communication module 4 are respectively connected to the audio control chip 23.

A mode that the sounding device 2 is separated from or combined with the book body 1 is used in the disclosure, the sounding device 2 can be applied to different books and can make corresponding sounds, and the technical product has multiple functions and rich contents. Using the detachable sounding device 2 makes the electronic sounding book become light and handy, and the contents of the book can be correspondingly increased since there is no need to install a heavy sounding device on the book, thereby improving the practicability of the book. Moreover, using this technology enables a user only to purchase one sounding device that can be used in multiple books and even a full range of products, which is not only economical and practical, but also goes along with a simple and environmental idea. The detachable sounding device can be designed in various shapes, and can be designed and promoted for users of different ages.

Further, the audio control chip 23 is a voice chip that is stored with one or more book body voice data. The content identification module comprises a code storage device that is stored with an independent code corresponding to a content of the current book body and a second communication module 5 for connecting to the first communication module 4. The code storage device is connected to the second communication module 5. The voice data is stored in the voice chip avoiding arranging a high-volume storage device on the book body 1, and the book body 1 only needs to store the independent code of current book body, which can effectively saves production cost and the cost of a user on changing the book body.

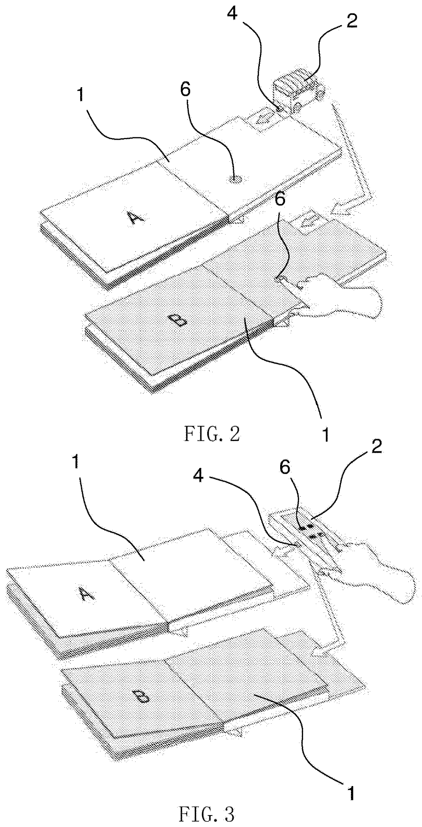

Fig. 2 shows the first embodiment of the disclosure, in which a sounding device 2 is provided. The sounding device 2 can be connected to two or more book bodies 1, all pages of the book body 1 are provided with the button device 6 of corresponding book page content, and the button device 6 is connected to the voice chip through the second communication module 5 and the first communication module 4. The first communication module 4 and the second communication module 5 are inserting ports, and the sounding device 2 is detachably installed in the book body 1. When the sounding device 2 is installed in the book body 1, the sounding device 2 can recognize specific book and specific button switch in the book (such as the switch in page four of the book body with code 01) through reading the independent code in the code storage device of current book body 1, and similarly, when the sounding device 2 is installed in another book body, the sounding device can also recognize the book and specific button switch in the book (such as the switch in page four of the book body with code 02) automatically. In a similar fashion, when corresponding switch is pressed, the sounding device 2 makes the sound corresponding to the button device 6.

Fig. 3 shows the second embodiment of the disclosure, which is different from the first embodiment in that the button device 6 is arranged on the sounding device 2, and the button device 6 is connected to the voice chip. When the sounding device 2 is installed in the book body 1, the sounding device 2 can recognize information of specific book and audio information of corresponding book body content of each button device 6 on current sounding device 2 (such as the audio information of first page content of the book with current code 01 corresponding to the first button or whole introduction of the book with current code 01 corresponding to the second button) through reading the independent code in the code storage device of current book body 1. When corresponding button is pressed, the sounding device plays the audio information corresponding to the book body.

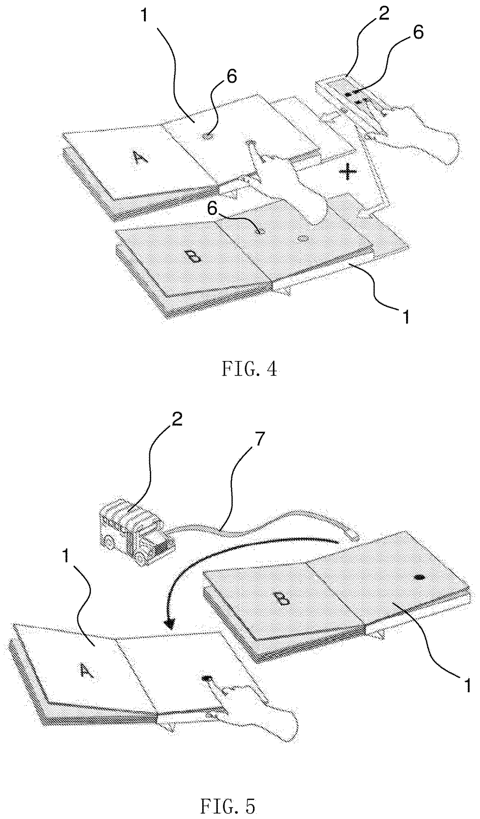

Fig. 4 shows the third embodiment of the disclosure, wherein both the sounding device 2 and the book body 1 can be provided with the button device 6 to realize more functions.

The first communication module 4 and the second communication module 5 can also be connected through a conductive wire 7 except for being connected in a inserting manner, wherein the ports comprising but being not limited to USB, RJ45, IEEE1394, pin header, etc. can be used in the first communication module 4 and the second communication module 5 The conductive wire 7 used is also a transmitting wire corresponding to the ports above.

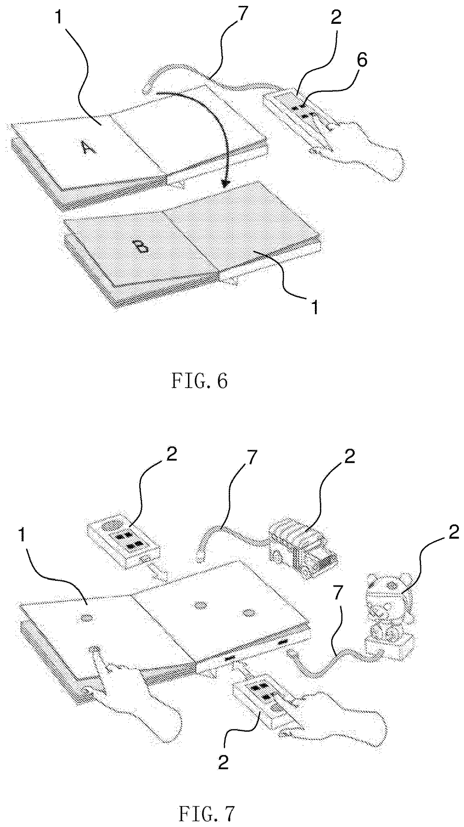

All connecting modes of the conductive wire 7 can be applied to the first to the third embodiments, i.e., the sounding device 2 is connected to the book body 1 through the conductive wire 7, and as the fourth embodiment shown in Fig. 5, the sounding device 2 is connected to the book body 1 provided with the button device 6 through the conductive wire 7. According to a fifth embodiment shown in Fig. 6, the sounding device 2 with the button device 6 is connected to the book body 1.

Fig. 7 shows the sixth embodiment of the disclosure, which comprises multiple sounding devices 2, the book body 1 is provided with multiple ports of the second communication module 5, and the multiple sounding devices 2 are connected to the book body 1 through the conductive wire 7 or in an inserting manner. The design can enable the sounding devices 2 corresponding to different models or different functions to make sounds according to different buttons, thereby greatly increasing the interactivity, for example, inserting a sounding module with the button device 6 can realize function expansion of the button, for example, if the sounding devices 2 with different shapes such as a car shape and a doll shape are inserted, when the current book page content is a vehicle, the sounding device 2 with the car shape is selected to make sound, and when current book page content is a cartoon figure, the sounding device 2 with the doll shape makes sound, or two or more sounding devices 2 make sounds at the same time, which greatly increases the interactivity.

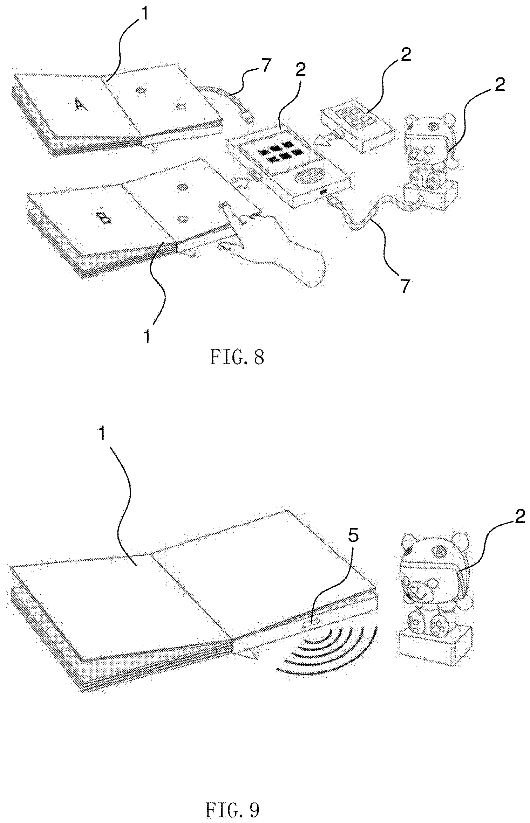

Fig. 8 shows the seventh embodiment of the disclosure, in which a sounding device 2 is provided. The sounding device 2 is provided with multiple ports of the first communication module 4, multiple book bodies 1 or other sounding devices are connected to the sounding device 2 through the conductive wire 7 or in an inserting manner, a mode that a sounding device 2 is commonly used in multiple book bodies 1 is used. When multiple books are operated, only one sounding device 2 needs to be used, which can effectively saves the use cost of the user.

Except for use a wired connecting mode, a wireless connecting mode can also be used in the disclosure. That is, in the embodiments above, the conductive wire 7 or the inserting connecting mode is changed in the wireless connecting mode. That is, the first communication module 4 and the second communication module 5 are wireless communication modules. Wherein, the wireless connection can be conducted through different wireless technologies, such as comprising but being not limited to Tone Detection, IR, 2.4G, 433Hz, wifi, Bluetooth and other technologies.

Fig. 9 shows the eighth embodiment of the disclosure, wherein the wireless communication module is concealed in the book body 1 and is connected to the button device 6 of each page. The wireless communication module of corresponding sounding device 2 is concealed in the sounding device 2 with a doll shape. When the button device 6 of the book body 1 is pressed, the wireless communication module in the book body 1 can recognize corresponding audio information of the button device 6 pressed and transmit corresponding wireless code to the sounding device 2, and after the sounding device 2 receives the wireless code, decoding is conducted and corresponding sound is made.

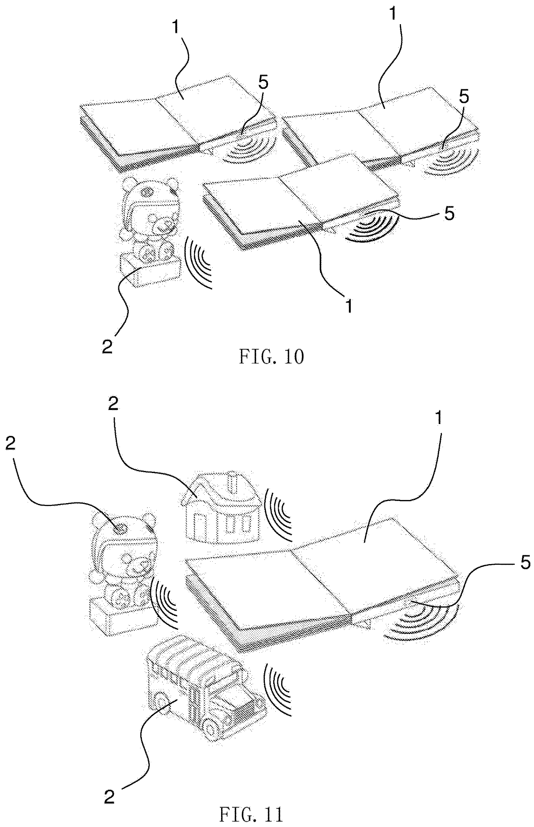

Fig. 10 shows the ninth embodiment of the disclosure, wherein a sounding device 2 is connected to multiple book bodies 1 at the same time. In this way, only appropriately programming for the audio control chip in the sounding device and the content identification module in the book body can realize that multiple books are provided with one sounding device, which can reduce the production cost.

Similarly, according to a tenth embodiment of the disclosure as shown in Fig. 11, a book body 1 can be connected to multiple sounding devices 2 in a wireless manner, and all sounding devices 2 have different features, thus can greatly increase the interactivity and enrich the contents.

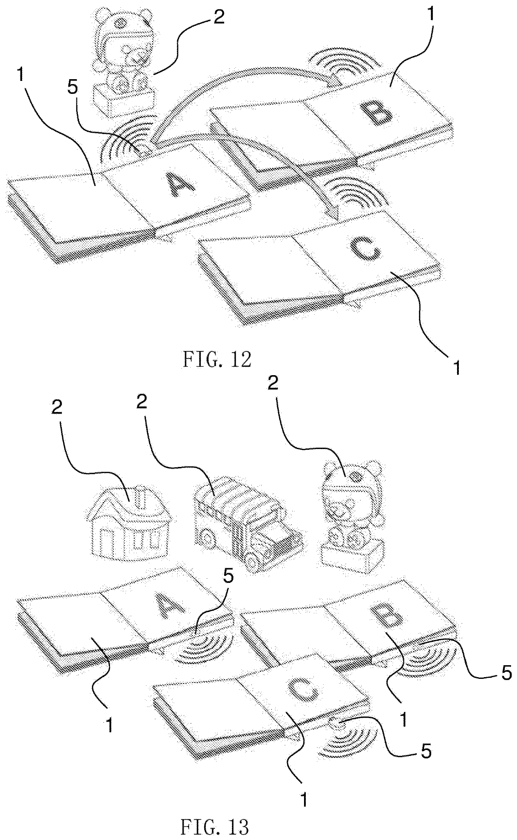

According to an eleventh embodiment of the disclosure as shown in Fig. 12, the wireless communication module on the book body 1 can be inserted and installed in the book body 1, and the wireless communication module is inserted in corresponding book body while being used, which can effectively save the production cost of the book body 1.

Further, the wireless communication module comprises a power supply module for supplying power to the book body 1, the book body 1 is charged and recognized when the wireless communication module is inserted in corresponding book body 1, the power supply arranged in the wireless communication module is used in the design, the book body 1 does not need to be provided with a power supply, which can effectively save the cost, the user only needs to charge the wireless communication module to meet the requirement on power utilization, the design scheme can be easy for the user to switch the books to use, and the practicability is greatly increased.

According to a twelfth embodiment of the disclosure as shown in Fig. 13, the multiple sounding devices 2 can be combined, connected and communicated with multiple book bodies 1. Similarly, the wireless communication module on the book body 1 can be built or inserted in the book body 1, thus can reserve larger space for a developer to play more creativity.

Further, the wireless communication modules arranged in the sounding device or the book body can be unidirectional or bidirectional in working.

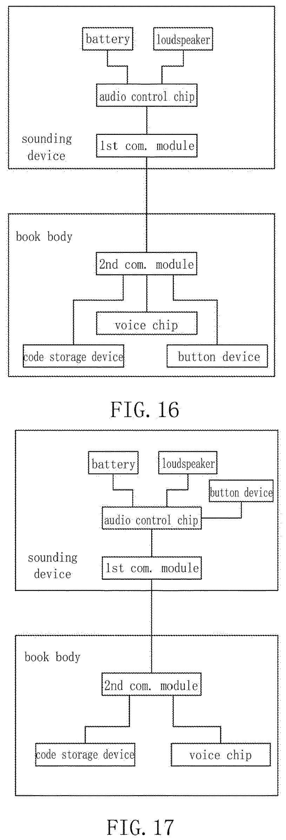

In addition, the voice data can further be arranged in the book body 1 except for being stored in the sounding device 2, specifically, as shown in Figs. 16 and 17, the content identification module comprises the voice chip stored with the voice data of current book body, the code storage device stored with the independent code corresponding to current book body content and the second communication module 5 connected to the first communication module 4. The code storage device and the voice chip are connected to the second communication module 5. The voice chip is arranged in the book body, the audio control chip does not need to be stored an audio data of the book body in advance, the manufacturing cost at an early stage is relatively low, the development elasticity and extensibility of future market are relatively high, and the product development has low risk.

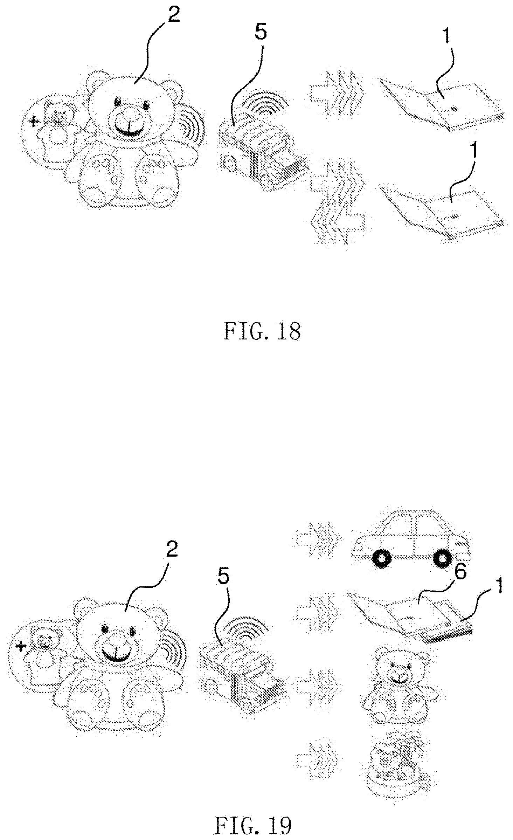

Fig. 18 shows the thirteenth embodiment of the disclosure, which comprises the sounding device of a doll type, the second communication module 5 with a wireless function and one or more book bodies 1 (two book bodies are shown in Fig. 18), a doll is internally provided with the audio control chip 23, the loudspeaker 21, the battery 22 and the first communication module 4 with a wireless communication function, and the audio control chip 23 in the embodiment is a decoder instead of a non-voice chip. The content identification module in the book body 1 comprises the code storage device, the button device and the voice chip stored with the voice data of current book body 1. When the second communication module 5 is connected to the book body 1, a circuit module in the book body 1 is supplied and the independent code of the book body 1 is recognized. After the button device on the book body is pressed, voice contents are transmitted to the sounding device through the second communication module 5 and are decoded through the audio control chip 23, and then the loudspeaker 21 outputs the sound. Therefore, it is unnecessary to store appointed contents in the doll.

Similarly, as another improvement to the foregoing contents, according to a fourteenth embodiment of the disclosure as shown in Fig. 19, the button device 6 is arranged on the second communication module 5 with the wireless function, the second communication module 5 is connected to the voice chip on the book body, a button signal is transmitted to the voice chip, then related contents of the voice chip are transmitted into the audio control chip 23 in the doll through the second communication module 5 to be decoded, and then the sound is outputted by the loudspeaker 21. Since the button device 6 is arranged on the second communication module 5, the production cost of the book body can be further saved.

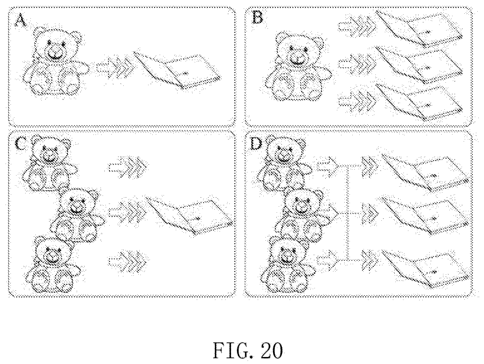

Further, Fig. 20 shows the fifteenth embodiment of the disclosure, in which the communication is conducted by more than one sounding devices 2 with the doll type, more than one wireless communication modules and more than one book bodies together. It can be the communication between the book bodies, can further be the communication between dolls, and can further be communication between the book body and the doll, and the communication there between can be one to one (as shown in Fig. 20A), one to many (as shown in Fig. 20B), many to one (as shown in Fig. 20C) and many to many (as shown in Fig. 20D), which is ever changing.

The doll can be connected to other products instead of the book, and can be but is not limited to a toy, a decoration, a daily article, etc. which has high elasticity to future development.

In all the embodiments above, the button device is preferably a film switch printed by flexible function, and certainly, the button device can also be but not limited to a metal dome switch, a capacitance switch, a magnetic control switch, a light sensing switch, etc.

In all the embodiments above, the device can appear by different states, and the device can be, but is not limited to a book, a toy, a packing box, a furnishing, a platform, a daily article, etc.

According to a book content identification method of the electronic sounding book with a detachable sounding device, the content identification module on the book body is stored with content identification information of the current book body and the corresponding button device of the corresponding book page content, when the content identification module is connected to the audio control chip on the sounding device, the audio control chip acquires the information of the current book body connected and the corresponding button device of the corresponding book page content of the book body, and when the button device of the corresponding book page content is pressed, the audio control chip drives the loudspeaker to make a sound corresponding to the book body, the book page and the button according to the recognized information.

Further, the content identification module is stored with an independent code corresponding to the book body, the audio control chip is stored with voice data of each independently coded book body and a relationship of the specific voice data corresponding to the book body in advance, after the sounding device is connected to the book body, the currently connected book body is recognized through the independent code, and the relationship of the specific voice data corresponding to the book body of the button device is obtained, and after the button device is pressed, the audio control chip drives the loudspeaker to make a sound corresponding to the book body, the book page and the button according to the relationship between the specific button and the voice data recognized.

Further, the content identification module is stored with an independent code corresponding to the current book body and is stored with voice data corresponding to the code and the book page content, after the sounding device is connected to the book body, a relationship of the specific voice data corresponding to the book body of the button device is obtained through the code, and after the button device is pressed, the audio control chip drives the loudspeaker to make a sound corresponding to the book body, the book page and the button according to the relationship between the specific button and the voice data recognized.

Further, the sounding device can be connected to multiple book bodies, and is used as a common sounding device of multiple book bodies.

As another improvement to the foregoing contents, the book body is connected to multiple sounding devices, and when the button device is pressed, one or more specific sounding devices appointed by current button device make sounds.

The foregoing descriptions are merely preferred embodiments of the disclosure, and the disclosure is not limited to the foregoing embodiments. Any technical solution that achieves the technical effect of the disclosure by the same means shall fall within the protection scope of the disclosure.

## Claims

1. An electronic sounding book with a detachable sounding device, **characterized in that**: the device comprises a book body, a sounding device and a button device; the button device is arranged on the book body and/or the sounding device, the book body is provided with an content identification module for recognizing a current book body and the button device of a corresponding book page content; the sounding device comprises a loudspeaker, a battery, an audio control chip and a first communication module for communicating with the content identification module; the loudspeaker, the battery and the first communication module are respectively connected to the audio control chip; and the content identification module comprises a second communication module for connecting to the first communication module.

2. The electronic sounding book with a detachable sounding device according to claim 1, **characterized in that**: the audio control chip is a voice chip that is stored with one or more book body voice data; the content identification module comprises a code storage device that is stored with an independent code corresponding to a content of the current book body; and the code storage device is connected to the second communication module.

3. The electronic sounding book with a detachable sounding device according to claim 1, **characterized in that**: the content identification module comprises a voice chip that is stored with voice data of the current book body and a code storage device that is stored with an independent code corresponding to a content of the current book body; and the code storage device and the voice chip are connected to the second communication module.

4. The electronic sounding book with a detachable sounding device according to claim 1, **characterized in that**: when the button device is arranged on the book body; the button device is connected to the audio control chip through the second communication module and the first communication module; and when the button device is arranged on the sounding device, the button device is connected to the audio control chip.

5. The electronic sounding book with a detachable sounding device according to any one of claims 1 to 4, comprising two or more sounding devices, and each sounding device is respectively connected to the same book body.

6. The electronic sounding book with a detachable sounding device according to any one of claims 1 to 4, comprising two or more book bodies, and each book body is respectively connected to the same sounding device.

7. The electronic sounding book with a detachable sounding device according to any one of claims 1 to 4, **characterized in that**: the first communication module and the second communication module are connected through a wired or wireless manner.

8. A book content identification method of the electronic sounding book with a detachable sounding device according to any one of claims 1 to 7, **characterized in that**: the content identification module on the book body is stored with content identification information of the current book body and the corresponding button device of the corresponding book page content; when the content identification module is connected to the audio control chip on the sounding device, the audio control chip acquires the information of the current book body connected and the corresponding button device of the corresponding book page content of the book body; and when the button device of the corresponding book page content is pressed, the audio control chip drives the loudspeaker to make a sound corresponding to the book body, the book page and the button according to the recognized information.

9. The book content identification method of the electronic sounding book with a detachable sounding device according to claim 8, **characterized in that**: the content identification module is stored with an independent code corresponding to the book body; the audio control chip is stored with voice data of each independently coded book body and a relationship of the specific voice data corresponding to the book body in advance; after the sounding device is connected to the book body, the currently connected book body is recognized through the independent code; and the relationship of the specific voice data corresponding to the book body of the button device is obtained; and after the button device is pressed, the audio control chip drives the loudspeaker to make a sound corresponding to the book body, the book page and the button according to the relationship between the specific button and the voice data recognized.

10. The book content identification method of the electronic sounding book with a detachable sounding device according to claim 8, **characterized in that**: the content identification module is stored with an independent code corresponding to the current book body and voice data corresponding to the code and the book page content; after the sounding device is connected to the book body, a relationship of the specific voice data corresponding to the book body of the button device is obtained through the code; and after the button device is pressed, the audio control chip drives the loudspeaker to make a sound corresponding to the book body, the book page and the button according to the relationship between the specific button and the voice data recognized.
